# EUROPÄISCHE PATENTSCHRIFT

(11) **EP 2 683 124 B1**
(45) Veröffentlichungstag und Bekanntmachung des Hinweises auf die Patenterteilung: **25.11.2015**
(21) Anmeldenummer: 12175140.8
(22) Anmeldetag: 05.07.2012
(51) Int. Cl.: H04L 25/02

(54) **Sende-/Empfangsvorrichtung und Verwendung in einem Automatisierungssystem**
Transmission/reception device and use in an automation system
Dispositif d'émission/réception et utilisation dans un système d'automatisation

(43) Veröffentlichungstag der Anmeldung: 08.01.2014
(73) Patentinhaber: Siemens Aktiengesellschaft, 80333 München (DE)
(72) Erfinder: Donderer, Markus, 92224 Amberg (DE); Haller, Hubert, 92266 Ensdorf (DE); Kroemer, Rene, 09337 Hohenstein-Ernstthal (DE); Meyer, Martin, 90425 Nürnberg (DE)

(56) Entgegenhaltungen:
- US-A1- 2001 022 529
- US-A1- 2008 037 617

## Beschreibung

Die Erfindung betrifft eine Sende-/Empfangsvorrichtung ausgestaltet mit einem Baustein, umfassend eine Sendeeinheit, eine Empfangseinheit und ein Protokollmittel für eine digitale Datenübertragung, wobei die Sendeeinheit und die Empfangseinheit ausgestaltet sind nach dem Low-Voltage-Differential-Signaling-Standard zu arbeiten und das Protokollmittel ausgestaltet ist, Informationen auf eine Datenübertragungsstrecke zu geben bzw. entgegenzunehmen.

Die Bezeichnung LVDS steht für Low Voltage Differential Signaling und ist im Standard ANSI/TIA/EIA-644-1995 definiert. Dieser Standard beschreibt eine Schnittstelle für Hochgeschwindigkeits-Datenübertragungen und legt dabei im Wesentlichen die physikalische Übertragungsschicht ohne die verwendeten Protokollschichten fest.

Nach dem Stand der Technik beispielsweise unter http://de.wikipedia.org/wiki/Low_Voltage_Differential_Signali ng ist eine einfache LVDS-Verbindung bestehend aus Sender, Empfänger und Abschlusswiderstand, bekannt. Auf der Senderseite erzeugt eine Konstantstromquelle einen Strom von 3,5 mA. Dieser wird, abhängig vom Logik-Pegel des Eingangsignals, zwischen den beiden Signalleitungen umgeschaltet. Dabei wird die jeweils andere Leitung mit dem Null-Pegel verbunden. Auf der Empfängerseite fließt der Strom durch einen Abschlusswiderstand von 100 Ohm. Dieser Wert entspricht einer Leitungsimpedanz, wodurch Reflexionen auf der Leitung verhindert werden. Der Signalstrom erzeugt im Empfänger eine Spannungsänderung von + 350 mV zu - 350 mV und umgekehrt.

Aus der US 2001/0022529 A1 ist eine Sende-/Empfangsvorrichtung, insbesondere für low voltage differential signals (LVDS), mit einer Eingangsschaltung für eine Empfangseinheit mit den Merkmalen des Oberbegriffs des Anspruchs 1 bekannt. Mit der Eingangsbeschaltung werden zwar Störungen auf den Ausgangssignalen bevor sie zur Empfangsvorrichtung gelangen unterdrückt, aber eine Lösung für ein schnelles Einschwingen der Signale an der Empfangsvorrichtung wird nicht offenbart.

In der US 2008/0037617 A1 wird aufgezeigt, wie man durch eine Beschaltung einer Sende-/Empfangsvorrichtung mit einem variablen Widerstandsnetzwerk, die Übertragungsrate erhöhen kann.

Bei den bekannten LVDS-Verbindungen ist es von Nachteil, dass für eine Verbindung nur eine begrenzte Leitungslänge von beispielsweise 1 Meter genutzt werden kann. Weiterhin ist es von Nachteil, dass wenn Baugruppen mit unterschiedlichen Stromversorgungen über eine LVDS-Verbindung kommunizieren sollen, zwischen den unterschiedlichen Baugruppen ein Potentialunterschied besteht, welcher sich störend bemerkbar macht. Durch eine Potentialtrennung, beispielsweise durch eine AC-Kopplung (Wechselstromkopplung) kann der Potentialunterschied eliminiert werden. Ein Einsatz einer LVDS-Verbindung bzw. der damit entstehenden Datenübertragungsstrecke steht nach derzeitigem Stand der Technik eine begrenzte Längenausdehnung und ein Potentialunterschied von unterschiedlichen Baugruppen entgegen.

Es ist Aufgabe der Erfindung eine Sende-/Empfangsvorrichtung bereitzustellen, welche nach dem LVDS-Standard arbeitet und dennoch bei einer erhöhten Längenausdehnung der LVDS-Verbindung bzw. bei einer längeren Datenübertragungsstrecke fehlerfrei die Signale überträgt.

Für die eingangs genannte Sende-/Empfangsvorrichtung wird die Aufgabe durch die Merkmalskombination von Anspruch 1 gelöst. Die zwischen der Empfangseinheit und den Anschlusspunkten angeordneten Bauelemente sorgen für ein schnelleres Einschwingen der Signale am Eingang der Empfangseinheit. Bei dieser Schaltungsmaßnahme darf der nach dem bekannten Stand der Technik eingesetzte Abschlusswiderstand nicht in der Empfangseinheit integriert sein.

Die Signalqualität bei der Datenübertragung zwischen der Sendeeinheit und der Empfangseinheit wird durch den zwischen dem ersten Anschlusspunkt und dem zweiten Anschlusspunkt angeordneten zweiten Widerstand verbessert. Dieser zweite Widerstand entspricht dem nach dem Stand der Technik bekannten 100 Ohm Abschlusswiderstand und ist nicht in der Empfangseinheit angeordnet.

Ein besonders gutes Einschwingen der Signale an der Empfangsvorrichtung ergibt sich durch die aufgezeigte Dimensionierung der Bauelemente.

Insbesondere bei einem Einsatz der Datenübertragungsstrecke mit der LVDS-Technologie bei Baugruppen mit jeweils einer eigenen Stromversorgung, wodurch Potentialunterschiede zwischen den Baugruppen entstehen, ist es vorteilhaft, wenn parallel zum zweiten Widerstand ein erstes Wechselstromkopplungsmittel zum Koppeln der Empfangs-Längszweige an die Datenübertragungsstrecke angeordnet ist.

In einer weiteren Ausgestaltung ist zwischen der Sendeeinheit und einem dritten Anschlusspunkt ein erster Sende-Längszweig und zwischen der Sendeeinheit und einem vierten Anschlusspunkt ein zweiter Sende-Längszweig ausgebildet und ein zweites Wechselstromkopplungsmittel zum Koppeln der Sende-Längszweige an die Datenübertragungsstrecke zwischen dem dritten Anschlusspunkt und dem vierten Anschlusspunkt angeordnet.

Eine weitere Optimierung der Sende-/Empfangsvorrichtung wird dadurch erreicht, dass der zweite Widerstand als ein Anpasswiderstand an einen Wellenwiderstand der Leitungen der Datenübertragungsstrecke angepasst ist.

Für einen praktischen Einsatz der Sende-/Empfangsvorrichtung hat es sich bewährt, wenn das erste Wechselstromkopplungsmittel als ein induktiver Übertrager ausgelegt ist. Bei induktiven Übertragern mit Kernen, vorzugsweise aus dem Material Ferrit, können große Toleranzen bezogen auf eine Wicklüngsinduktivität auftreten, welche hauptsächlich durch die Werkstofftoleranz des Kerns bestimmt wird. Die Wicklungsinduktivität hat einen Einfluss auf die Signale und deren Einschwingverhalten. Mit den hier beschriebenen Schaltungsmaßnamen wird das Einschwingverhalten nahezu unabhängig von einer Toleranz der Wicklungsinduktivität optimiert.

Für eine Anwendung einer Sende-/Empfangsvorrichtung in der Automatisierungstechnik um Automatisierungskomponenten miteinander zu verbinden, wird die eingangs genannte Aufgabe dadurch gelöst, dass eine Sende-/Empfangsvorrichtung nach einem der Ansprüche 1 bis 5 in einem Automatisierungssystem zum Herstellen einer Datenverbindung zwischen einer übergeordneten Automatisierungskomponente und einer untergeordneten Automatisierungskomponente eingesetzt wird, wobei die übergeordnete Automatisierungskomponente ein erstes Schnittstellenmodul zum Anschluss an einen ersten Feldbus aufweist, wobei der erste Feldbus das erste Schnittstellenmodul mit einer Automatisierungssteuerung verbindet, weiterhin weist die übergeordnete Automatisierungskomponente ein zweites Schnittstellenmodul zum Anschluss an ein erstes Ende der Datenübertragungsstrecke auf, wobei ein zweites Ende der Datenübertragungsstrecke mit einem dritten Schnittstellenmodul der untergeordneten Automatisierungskomponente verbunden ist.

Die Sende-/Empfangsvorrichtung wird auf vorteilhafte Weise zum Aufbau einer Linienstruktur umfassend mehrere Ein-/Ausgabegeräte, welche jeweils über eine Datenübertragungsstrecke mit je einer Sende-/Empfangsvorrichtung verbunden sind, eingesetzt.

In der Zeichnung wird ein Ausführungsbeispiel der Sende-/Empfangsvorrichtung und deren Verwendung näher erläutert. Es zeigen:
- FIG 1: eine Datenübertragungsstrecke mit einer Sendeeinheit und einer Empfangseinheit,
- FIG 2: die Sende-/Empfangsvorrichtung als Blockschaltbild,
- FIG 3: eine Datenübertragungsstrecke mit an den Enden der Datenübertragungsstrecke angeschlossenen Sende-/Empfangsvorrichtung in Blockschaltbild-Darstellung,
- FIG 4: ein Automatisierungssystem mit darin verwendeten Sende-/Empfangsvorrichtungen,
- FIG 5: einen Signalverlauf der Spannung am Eingang der Empfangseinheit (nach dem Stand der Technik),
- FIG 6: eine Vergrößerung des Signalverlaufs der Spannung am Eingang der Empfangseinheit (nach dem Stand der Technik),
- FIG 7: einen Signalverlauf der Spannung am Eingang der Empfangseinheit (mit der erfindungsgemäßen Schaltungsanordnung) und
- FIG 8: eine Vergrößerung des Signalverlaufs der Spannung am Eingang der Empfangseinheit (mit der erfindungsgemäßen Schaltungsanordnung).

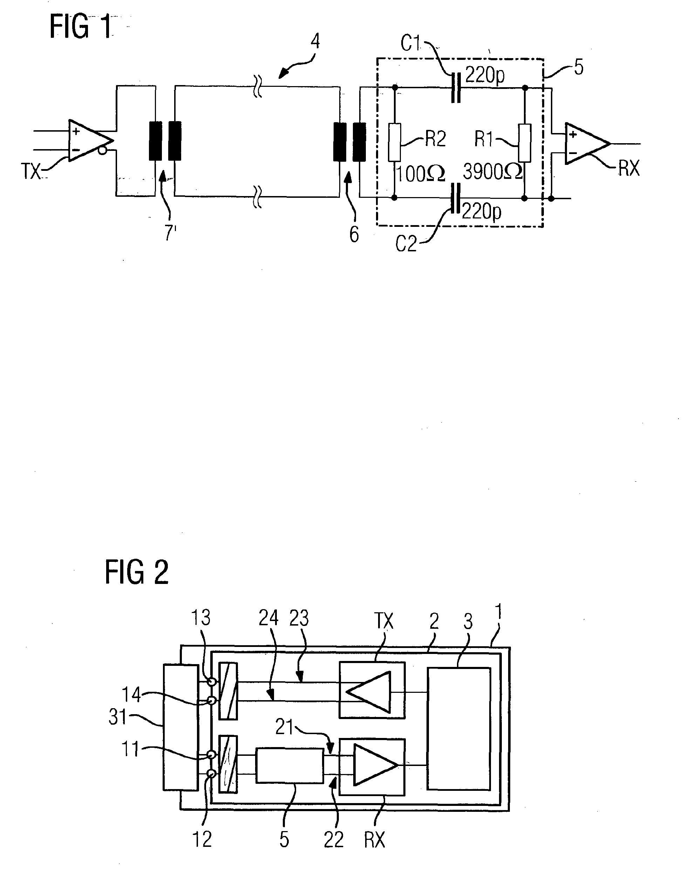

Gemäß FIG 1 ist eine Datenübertragungsstrecke 4 mit einer linksseitig angeordneten Sendeeinheit TX und einer rechtsseitig angeordneten Empfangseinheit RX dargestellt. Die Empfangseinheit RX ist an einen ersten Empfangs-Längszweig 21 und an einen zweiten Empfangs-Längszweig 22 angeschlossen. Um die Signalqualität der von der Sendeeinheit TX ausgesendeten Signale an den Eingängen der Empfangseinheit RX zu verbessern, ist zwischen der Empfangseinheit RX und einem ersten Anschlusspunkt 11 der erste Empfangs-Längszweig 21 und zwischen der Empfangseinheit RX und einem zweiten Anschlusspunkt 12 der zweite Empfangs-Längszweig 22 ausgebildet, wobei im ersten Empfangs-Längszweig 21 ein erster Kondensator C1 und im zweiten Empfangs-Längszweig 22 ein zweiter Kondensator C2 angeordnet ist, weiterhin ist zwischen den Kondensatoren C1,C2 und der Empfangseinheit RX ein erster Widerstand R1 derart angeordnet, dass er den ersten Empfangs-Längszweig 21 und den zweiten Empfangs-Längszweig 22 verbindet. Zwischen dem ersten Anschlusspunkt 11 und dem zweiten Anschlusspunkt 12 ist ein zweiter Widerstand R2 angeordnet. Parallel zum zweiten Widerstand R2 ist ein erstes Wechselstromkopplungsmittel 6 zum Koppeln der Empfangs-Längszweige 21,22 an die Datenübertragungsstrecke 4 angeordnet. Die Sendeeinheit TX dieser beispielhaft angegebenen Datenübertragungsstrecke 4 ist wiederum über ein weiteres zweites Wechselstromkopplungsmittel 7' an die Datenübertragungsstrecke 4 gekoppelt.

Mit der Schaltungsanordnung aus den Bauelementen erster Kondensator C1, zweiter Kondensator C2, erster Widerstand R1 und zweiter Widerstand R2 vor den Eingängen der Empfangseinheit RX wird ein verbessertes Einschwingen der LVDS-Signale an den Eingängen der Empfangseinheit RX gewährleistet. Die Schaltungsanordnung bildet einen Hochpass.

Mit der FIG 2 ist eine Sende-/Empfangsvorrichtung 1, wie sie mit Vorteil in Automatisierungskomponenten eingesetzt werden kann, in einem Blockschaltbild dargestellt. Die Sende-/Empfangsvorrichtung 1 weist einen Baustein 2 auf, umfassend die Sendeeinheit TX, die Empfangseinheit RX und ein Protokollmittel 3 für eine digitale Datenübertragung, wobei die Sendeeinheit TX und die Empfangseinheit RX ausgestaltet sind, nach dem Low-Voltage-Differential-Signaling-Standard zu arbeiten und das Protokollmittel 3 ausgestaltet ist, Informationen auf die Datenübertragungsstrecke 4 zu geben bzw. von ihr entgegenzunehmen.

In dem ersten Empfangs-Längszweig 21 und dem zweiten Empfangs-Längszweig 22 ist in einem Optimierungsmittel 5 die aus FIG 1 bekannte Schaltungsanordnung mit den Bauteilen erster Kondensator C1, zweiter Kondensator C2, erster Widerstand R1 und zweiter Widerstand R2 angeordnet. Die Sende-/Empfangsvorrichtung 1 ist beispielsweise als eine kompakte Einsteckkarte mit einem Busanschluss 31 versehen, wobei dieser Busanschluss 31 mit Feldbussen aus der Automatisierungstechnik verbunden werden kann. Der Busanschluss 31 ist mit dem ersten Anschlusspunkt 11 und dem zweiten Anschlusspunkt 12 verbunden, wobei an dem ersten und zweiten Anschlusspunkt 11,12 das erste Wechselstromkopplungsmittel 6 angeordnet ist und den Busanschluss 31 dadurch an dem ersten und zweiten Empfangs-Längszweig 21,22 ankoppelt.

Ebenfalls ist in der Sende-/Empfangsvorrichtung 1 die Sendeeinheit TX integriert, wobei die Sendeeinheit TX über einen ersten Sende-Längszweig 23 und einem zweiten Sende-Längszweig 24 an ein zweites Wechselstromkopplungsmittel 7 angeschlossen ist. Das zweite Wechselstromkopplungsmittel 7 verbindet die Datenübertragungsstrecke 4 über einen dritten Anschlusspunkt 13 und einen vierten Anschlusspunkt 14 mit dem Busanschluss 31.

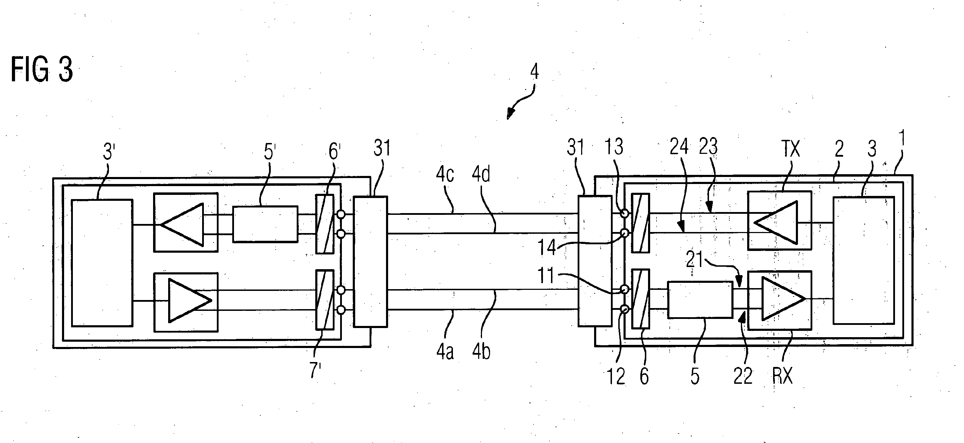

Die aus FIG 2 bekannte Sende-/Empfangsvorrichtung 1 in der Blockschaltbilddarstellung ist mit der FIG 3 zweifach angegeben, wobei linksseitig der Datenübertragungsstrecke 4 eine Sende-/Empfangsvorrichtung 1 und rechtsseitig der Datenübertragungsstrecke 4 eine weitere Sende-/Empfangsvorrichtung 1 angeordnet ist. Die Datenübertragungsstrecke 4 weist dabei eine erste Signalleitung 4a, eine zweite Signalleitung 4b, eine dritte Signalleitung 4c und eine vierte Signalleitung 4d auf.

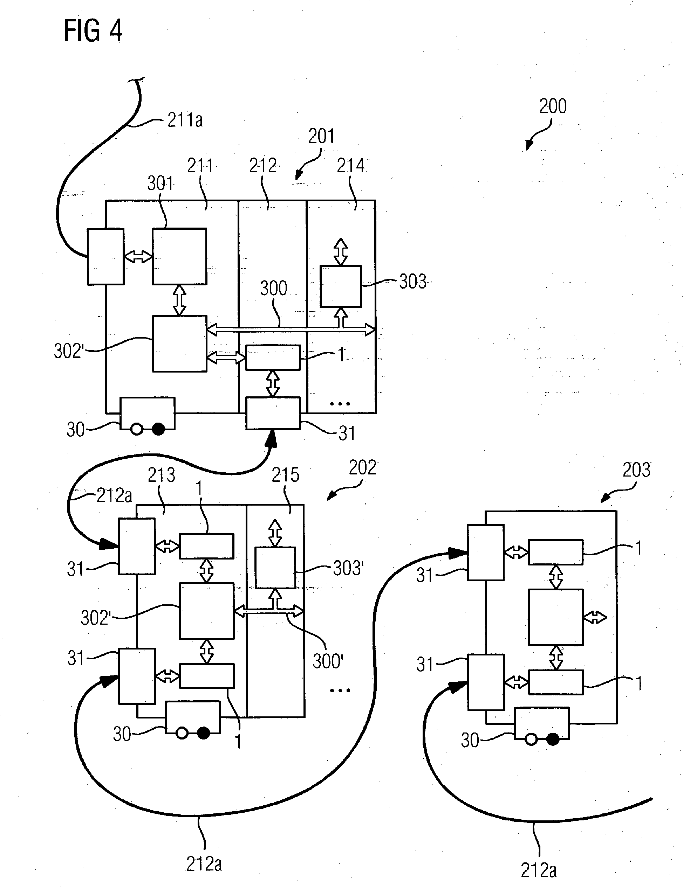

Gemäß FIG 4 ist ein Automatisierungssystem 200 mit einer übergeordneten Automatisierungskomponente 201 und einer ersten untergeordneten Automatisierungskomponente 202 und einer zweiten untergeordneten Automatisierungskomponente 203 dargestellt. Die übergeordnete Automatisierungskomponente 201 weist ein erstes Schnittstellenmodul 211 auf, wobei das erste Schnittstellenmodul 211 über einen Feldbusanschluss an einen ersten Feldbus 211a angeschlossen ist. Zur Koordinierung des Datenverkehrs auf dem ersten Feldbus 211a ist ein Protokollbaustein 301 für den ersten Feldbus 211a vorgesehen. Eine interne Kommunikation in der übergeordneten Automatisierungskomponente 201 wird über einen Rückwandbusmaster 302 erreicht. Der Rückwandbusmaster 302 verbindet das erste Schnittstellenmodul 211 mit einem zweiten Schnittstellenmodul 212, wobei das zweite Schnittstellenmodul 212 dem aus den vorherigen Figuren bekannten Busanschluss 31 aufweist und der Busanschluss 31 ausgestaltet ist, dass zweite Schnittstellenmodul 212 an einen zweiten Feldbus 212a anzuschließen. Gemäß der Erfindung kann der zweite Feldbus 212a nun in einer LVDS-Technologie aufgebaut werden. Durch den Einsatz der Sende-/Empfangsvorrichtung 1 in dem zweiten Schnittstellenmodul 212 kann eine Länge des zweiten Feldbusses 212a zu der ersten untergeordneten Automatisierungskomponente 202 mit einem dritten Schnittstellenmodul 213 erheblich länger ausgestaltet sein, als es bisher nach dem Stand der Technik möglich gewesen ist.

Das dritte Schnittstellenmodul 213 weist ebenfalls die erfindungsgemäße Sende-/Empfangsvorrichtung 1 auf, wobei die Sende-/Empfangsvorrichtung 1 zum Einen mit dem Busanschluss 31 des dritten Schnittstellenmoduls 213 verbunden ist und zum Anderen datentechnisch an einem weiteren Rückwandbusmaster 302' angekoppelt ist.

Zum Aufbau einer Linienstruktur umfassend mehrere Ein-/Ausgabegeräte, weist das dritte Schnittstellenmodul 213 noch eine weitere Sende-/Empfangsvorrichtung 1 auf, welche ebenfalls an den weiteren Rückwandbusmaster 302' angekoppelt ist. Die weitere Sende-/Empfangsvorrichtung 1 zum Aufbau der Linienstruktur ist ebenfalls an einen Busanschluss 31 angekoppelt. Über ein weiteres Leitungsstück des zweiten Feldbusses 212a wird an das dritte Schnittstellenmodul 213 die zweite untergeordnete Automatisierungskomponente 203 ebenfalls über einen Busanschluss 31 verbunden. In der zweiten untergeordneten Automatisierungskomponente 203 befinden sich jeweils wieder zwei Sende-/Empfangsvorrichtungen 1 zum Aufbau einer weiteren Linienstruktur.

Die dargestellten Baugruppen verfügen jeweils über einen Spannungsversorgungsanschluss 30.

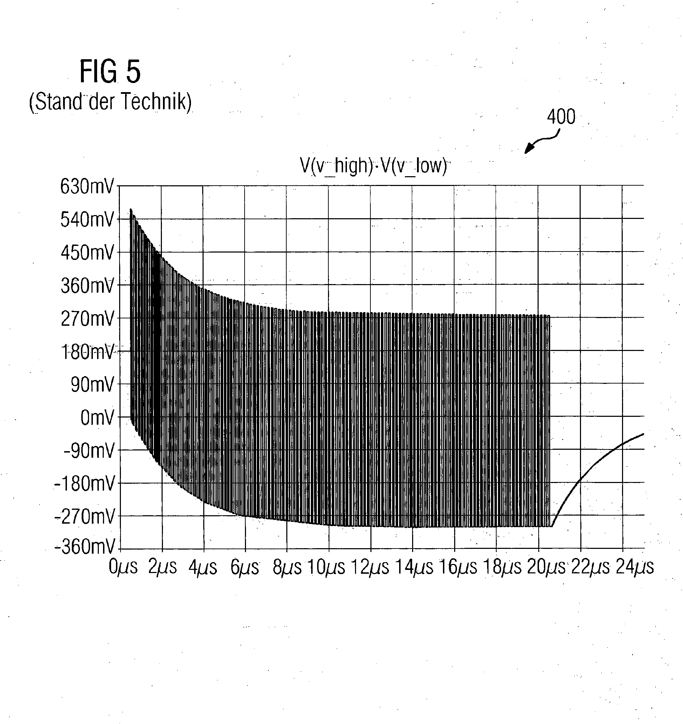

Um den Unterschied der Verbesserung durch den Einsatz des Optimierungsmittels 5 vor jeweils einer Empfangseinheit RX zu sehen, sind in den Figuren 5 bis 8 Signalverläufe der Spannung am Eingang der Empfangseinheit RX dargestellt.

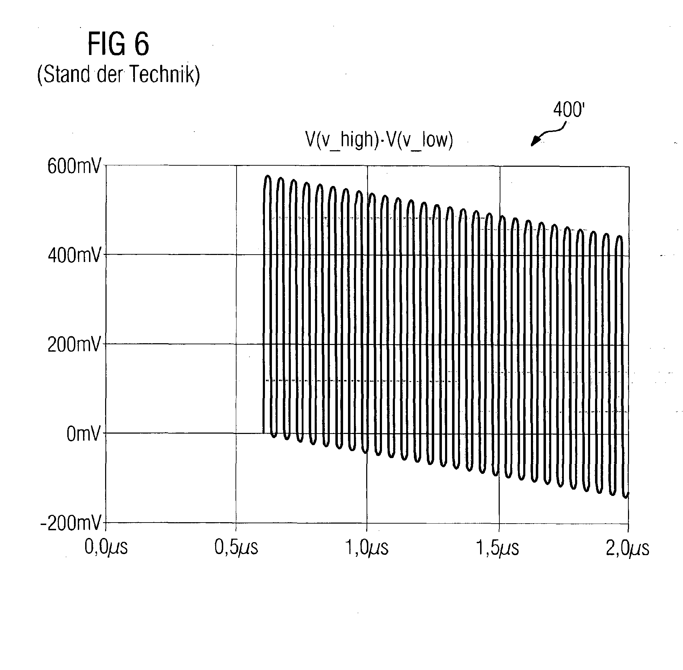

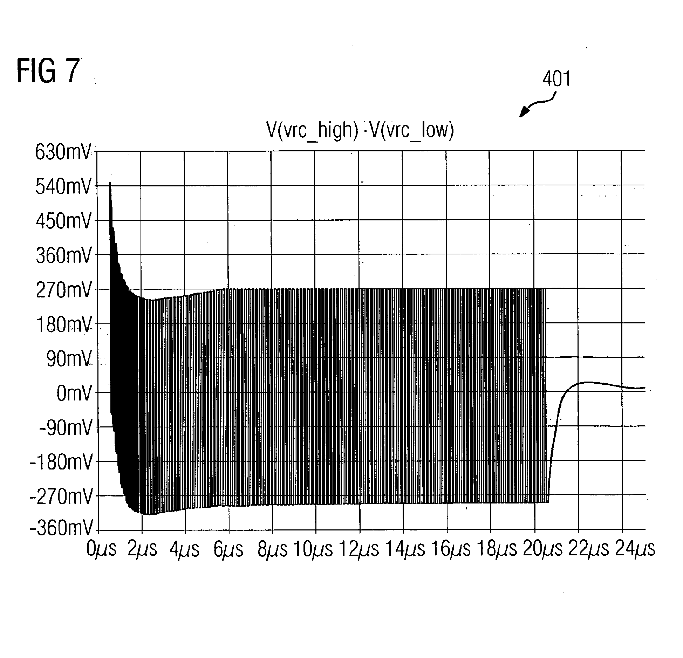

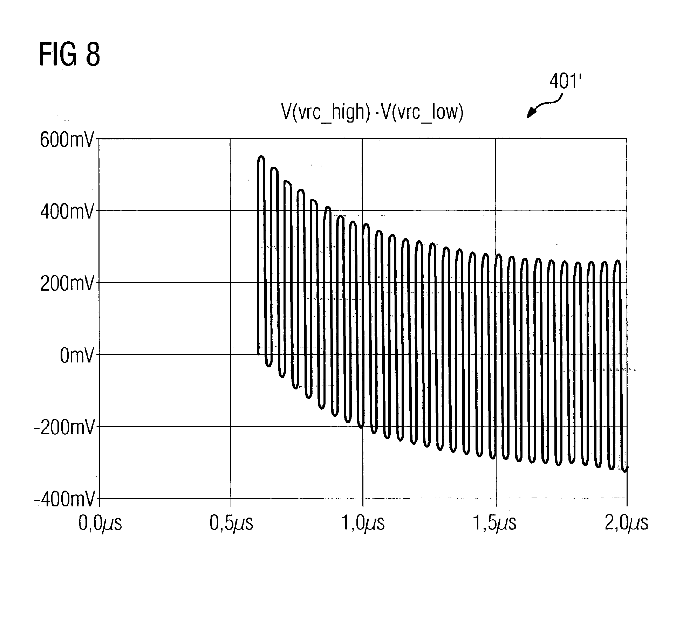

Die FIG 5 und FIG 6 zeigen jeweils den Signalverlauf der Spannung am Eingang der Empfangseinheit nach dem Stand der Technik und die FIG 7 und FIG 8 zeigen jeweils den Signalverlauf der Spannung am Eingang der Empfangseinheit RX mit der erfindungsgemäßen Optimierungsschaltung 5.

Für eine LVDS-Übertragung ist es von Vorteil wenn das LVDS-Signal ohne weitere Verzögerungen nach dem Anfang eines Datenpaketes einen stabilen Zustand am Eingang der Empfangseinheit RX erreicht. Eine Eingangsspannung an einem LVDS-Empfänger muss nach dem LVDS-Standard größer als +/- 100 mV sein, unterhalb dieser Schwelle ist der Ausgang undefiniert und kann u.U. zufällig schwanken. Damit der LVDS-Empfänger die Daten möglichst sicher erkennt und gegen Störungen robust ist, muss das Datensignal symmetrisch zu 0 Volt sein.

Gemäß der FIG 5 ist dies aber erst nach einigen µS der Fall, wobei die FIG 6 eine Vergrößerung des zeitlichen Ausschnittes von 0,5 µS bis 2,0 µS zeigt.

Gemäß den Figuren 7 und 8 wird ein verbessertes Einschwingen des Datensignales der LVDS-Datenübertragung gezeigt. Nach etwas über einer µS ist das Daten-Signal ungefähr symmetrisch zu 0 Volt und wird von dem LVDS-Empfänger mit maximaler Sicherheit empfangen. Bei der Beschaltung nach dem Stand der Technik dauerte es über 5 µS. Die +/- 100 mV Schwelle wird ebenfalls in nur einem Bruchteil der Zeit erreicht.

Weiterhin ist es vorteilhaft, wenn ein LVDS-Sender, wie die Sendeeinheit TX in FIG 1, einen 100 Ohm Widerstand zwischen den Einzelleitern hat. Mit diesem 100 Ohm Widerstand ist auch der Sender an den Wellenwiderstand der Leitung angepasst und Mehrfachreflexionen durch hin- und herlaufende Signalwellen werden unterdrückt.

Vorzugsweise wird die Empfangseinheit RX als ein LVDS-Empfänger mit einem Single-Ended-Ausgang aufgebaut. Ein Single-Ended-Ausgang ist beispielsweise ein CMOS-Level-Ausgang an einem separaten LVDS-Empfänger IC (z.B. SN 65 LVDS 34).

## Patentansprüche

1. Sende-/Empfangsvorrichtung (1) ausgestaltet mit einem Baustein (2), umfassend
- eine Sendeeinheit (TX),
- eine Empfangseinheit (RX) und
- ein Protokollmittel (3) für eine digitale Datenübertragung,
wobei die Sendeeinheit (TX) und die Empfangseinheit (RX) ausgestaltet sind nach dem Low-Voltage-Differential-Signaling-Standard zu arbeiten und das Protokollmittel (3) ausgestaltet ist Informationen auf eine Datenübertragungsstrecke(4) zu geben beziehungsweise entgegenzunehmen, wobei zwischen der Empfangseinheit (RX) und einem ersten Anschlusspunkt (11) ein erster Empfangs-Längszweig (21) und zwischen der Empfangseinheit (RX) und einem zweiten Anschlusspunkt (12) ein zweiter Empfangs-Längszweig (22) ausgebildet ist, wobei im ersten Empfangs-Längszweig (21) ein erster Kondensator (C1) und im zweiten Empfangs-Längszweig (22) ein zweiter Kondensator (C2) angeordnet ist, weiterhin ist zwischen den Kondensatoren (C1,C2) und der Empfangseinheit (RX) ein erster Widerstand (R1) derart angeordnet, dass er den ersten Empfangs-Längszweig (21) und den zweiten Empfangs-Längszweig (22) verbindet,
**dadurch gekennzeichnet, dass**
zwischen dem ersten Anschlusspunkt (11) und dem zweiten Anschlusspunkt (12) ein zweiter Widerstand (R2) angeordnet ist, wobei die Kapazitätswerte des ersten und des zweiten Kondensators (C1,C2) im Bereich von 10pF bis 400pF, liegen und der Widerstandswert des ersten Widerstandes (R1) im Bereich von 2500 Ohm bis 4500 Ohm, liegt und der Widerstandswert des zweiten Widerstandes (R2) im Bereich von 80 Ohm bis 120 Ohm liegt.

2. Sende-/Empfangsvorrichtung (1) nach Anspruch 1, wobei parallel zum zweiten Widerstand (R2) ein erstes Wechselstromkopplungsmittel (6) zum Koppeln der Empfangs-Längszweige (21,22) an die Datenübertragungsstrecke(4) angeordnet ist.

3. Sende-/Empfangsvorrichtung (1) nach einem der Ansprüche 1 bis 2, wobei zwischen der Sendeeinheit (TX) und einem dritten Anschlusspunkt (13) ein erster Sende-Längszweig (23) und zwischen der Sendeeinheit (TX) und einem vierten Anschlusspunkt (14) ein zweiter Sende-Längszweig (24) ausgebildet ist und ein zweites Wechselstromkopplungsmittel (7) zum Koppeln der Sende-Längszweige (23,24) an die Datenübertragungsstrecke(4) zwischen dem dritten Anschlusspunkt (13) und dem vierten Anschlusspunkt (14) angeordnet ist.

4. Sende-/Empfangsvorrichtung (1) nach einem der Ansprüche 1 bis 3, wobei der zweite Widerstand (R2) als ein Anpasswiderstand an einen Wellenwiderstand der Leitungen (4a,4b,4c,4d) der Datenübertragungstrecke (4) angepasst ist.

5. Sende-/Empfangsvorrichtung (1) nach einem der Ansprüche 2 bis 4, wobei das erste Wechselstromkopplungsmittel (6) als ein induktiver Übertrager ausgelegt ist.

6. Verwendung einer Sende-/Empfangsvorrichtung (1) nach einem der Ansprüche 1 bis 5 in einem Automatisierungssystem (200) zum Herstellen einer Datenverbindung zwischen einer übergeordneten Automatisierungskomponente (201) und einer untergeordneten Automatisierungskomponente (202,203), wobei die übergeordneten Automatisierungskomponente (201) ein erstes Schnittstellenmodul (211) zum Anschluss an einen ersten Feldbus (211a) aufweist, wobei der erste Feldbus (211a) das erste Schnittstellenmodul (211) mit einer Automatisierungssteuerung verbindet, weiterhin weist die übergeordneten Automatisierungskomponente (201) ein zweites Schnittstellenmodul (212) zum Anschluss an ein erstes Ende der Datenübertragungsstrecke (4) auf, wobei ein zweites Ende der der Datenübertragungsstrecke (4) mit einem dritten Schnittstellenmodul (213) der untergeordneten Automatisierungskomponente (202, 203) verbunden ist.

7. Verwendung der Sende-/Empfangsvorrichtung (1) nach Anspruch 6 zum Aufbau einer Linienstruktur umfassend mehrere Ein-Ausgabegeräte, welche jeweils über eine Datenübertragungsstrecke (4) mit je einer Sende-/Empfangsvorrichtung (1) verbunden sind.

## Claims

1. Transmission/reception device (1) configured with a module (2), comprising
- a transmitter unit (TX),
- a receiver unit (RX) and
- a protocol means (3) for digital data transmission,
wherein the transmitter unit (TX) and the receiver unit (RX) are configured to operate on the low-voltage differential signalling standard and the protocol means (3) is configured to give or receive information to a data transmission path (4), wherein a first receiving longitudinal branch (21) is formed between the receiver unit (RX) and a first terminal point (11), and a second receiving longitudinal branch (22) is formed between the receiver unit (RX) and a second terminal point (12), wherein a first capacitor (C1) is arranged in the first receiving longitudinal branch (21), and a second capacitor (C2) is arranged in the second receiving longitudinal branch (22), and furthermore a first resistor (R1) is arranged between the capacitors (C1, C2) and the receiver unit (RX), such that it connects the first receiving longitudinal branch (21) and the second receiving longitudinal branch (22),
**characterised in that**
a second resistor (R2) is arranged between the first terminal point (11) and the second terminal point (12), wherein the capacitance values of the first and second capacitors (C1, C2) lie in the range from 10 pF to 400 pF, and the resistance value of the first resistor (R1) lies in the range from 2500 ohms to 4500 ohms, and the resistance value of the second resistor (R2) lies in the range from 80 ohms to 120 ohms.

2. Transmission/reception device (1) according to claim 1, wherein a first AC coupling means (6) for coupling the receiving longitudinal branches (21, 22) to the data transmission path (4) is arranged parallel to the second resistor (R2).

3. Transmission/reception device (1) according to one of claims 1 to 2, wherein a first transmitting longitudinal branch (23) is formed between the transmitting unit (TX) and a third terminal point (13), and a second transmitting longitudinal branch (24) is formed between the transmitting unit (TX) and a fourth terminal point (14), and a second AC coupling means (7) for coupling the transmitting longitudinal branches (23, 24) to the data transmission path (4) is arranged between the third terminal point (13) and the fourth terminal point (14).

4. Transmission/reception device (1) according to one of claims 1 to 3, wherein the second resistor (R2) is matched as a matching resistor to a characteristic impedance of the lines (4a, 4b, 4c, 4d) of the data transmission path (4).

5. Transmission/reception device (1) according to one of claims 2 to 4, wherein the first AC coupling means (6) is designed as an inductive transducer.

6. Use of a transmission/reception device (1) according to one of claims 1 to 5 in an automation system (200) for establishing a data connection between a higher-level automation component (201) and a subordinate automation component (202, 203), wherein the higher-level automation component (201) has a first interface module (211) for connection to a first field bus (211a), wherein the first field bus (211a) connects the first interface module (211) to an automation controller, and furthermore the higher-level automation component (201) has a second interface module (212) for connection to a first end of the data transmission path (4), wherein a second end of the data transmission path (4) is connected to a third interface module (213) of the subordinate automation component (202, 203).

7. Use of the transmission/reception device (1) according to claim 6 for creating a line structure comprising a plurality of input/output devices, which are each connected via a data transmission path (4) to a transmission/reception device (1).

## Revendications

1. Dispositif ( 1 ) d'émission/réception conformé en ayant un module ( 2 ), comprenant
- une unité ( TX ) d'émission,
- une unité ( RX ) de réception et
- un moyen ( 3 ) de protocole pour une transmission numérique de données,
dans lequel l'unité ( TX ) d'émission et l'unité ( RX ) de réception sont conformées pour travailler suivant la norme low-voltage-differential-signaling et le moyen ( 3 ) de protocole est conformé pour donner ou recevoir des informations sur une section ( 4 ) de transmission de données dans lequel il est constitué, entre l'unité ( RX ) de réception et un premier point ( 11 ) de connexion, une première branche ( 21 ) longue de réception et, entre l'unité ( RX ) et un deuxième point ( 12 ) de connexion, une deuxième branche ( 22 ) longue de réception, dans lequel il est monté dans la première branche ( 21 ) longue de réception un premier condensateur ( C1 ) et, dans la deuxième branche ( 22 ) longue de réception, une première résistance ( R1 ) étant montée en outre entre les condensateurs ( C1, C2 ) et l'unité ( RX ) de réception de manière à ce qu'elle relie la première branche ( 21 ) longue de réception et la deuxième branche ( 22 ) longue de réception,
**caractérisé en ce que**
entre le premier point ( 11 ) de connexion et le deuxième point ( 12 ) de connexion est montée une deuxième résistance ( R2 ), les valeurs des capacités du premier et du deuxième condensateurs ( C1, C2 ) étant dans la plage de 10 pF à 400pF et la valeur de la première résistance ( R1 ) dans la plage de 2500 Ohm à 4500 Ohm et la valeur de la deuxième résistance ( R2 ) dans la plage de 80 Ohm à 120 Ohm.

2. Dispositif ( 1 ) d'émission/réception suivant la revendication 1, dans lequel il est monté en parallèle à la deuxième résistance ( R2 ) un premier moyen ( 6 ) de couplage en courant alternatif pour coupler les branches ( 21, 22 ) longues de réception à la section ( 4 ) de transmission de données.

3. Dispositif ( 1 ) d'émission/réception suivant l'une des revendications 1 à 2, dans lequel il est constitué, entre l'unité ( TX ) d'émission et un troisième point ( 13 ) de connexion, une première branche ( 23 ) longue d'émission et, entre l'unité ( TX ) d'émission et un quatrième point ( 14 ) de connexion, une deuxième branche ( 24 ) longue d'émission et un deuxième moyen ( 7 ) de couplage en courant alternatif, pour coupler les branches ( 23, 24 ) longues d'émission à la section ( 4 ) de transmission de données, est monté entre le troisième point ( 13 ) de connexion et le quatrième point ( 14 ) de connexion.

4. Dispositif ( 1 ) d'émission/réception suivant l'une des revendications 1 à 3, dans lequel la deuxième résistance ( R2 ) est adaptée sous la forme d'une résistance d'adaptation à une impédance caractéristique des lignes ( 4a,4b,4c,4d ) de la section ( 4 ) de transmission de données.

5. Dispositif ( 1 ) d'émission/réception suivant l'une des revendications 2 à 4, dans lequel le premier moyen ( 6 ) de couplage en courant alternatif est conçu sous la forme d'un transformateur inductif.

6. Utilisation d'un dispositif ( 1 ) d'émission/réception suivant l'une des revendications 1 à 5 dans un système ( 200 ) d'automatisation pour produire une liaison de données entre un élément ( 201 ) d'automatisation supérieur hiérarchiquement et un élément ( 202, 203 ) d'automatisation inférieur hiérarchiquement, l'élément ( 201 ) d'automatisation supérieur hiérarchiquement ayant un premier module ( 211 ) d'interface pour le raccordement à un premier bus ( 211a ) de terrain, le premier bus ( 211a ) de terrain reliant le premier module ( 211 ) d'interface à une commande d'automatisation, l'élément ( 201 ) d'automatisation supérieur hiérarchiquement ayant en outre un deuxième module ( 212 ) d'interface pour le raccordement à une première extrémité de la section ( 4 ) de transmission de données, une deuxième extrémité de la section ( 4 ) de transmission de données étant reliée à un troisième module ( 213 ) d'interface de l'élément ( 202, 203 ) d'automatisation inférieur hiérarchiquement.

7. Utilisation du dispositif ( 1 ) d'émission/réception suivant la revendication 6 pour la formation d'une structure de ligne comprenant plusieurs appareils d'entrée-sortie, qui sont reliés respectivement à respectivement un dispositif ( 1 ) d'émission/réception par une section ( 4 ) de transmission de données.
